# EUROPEAN PATENT APPLICATION

(11) **EP 3 584 769 A1**
(43) Date of publication of application: **25.12.2019**
(21) Application number: 18178728.4
(22) Date of filing: 20.06.2018
(51) Int. Cl.: G07C 9/00, H04W 12/08

(54) **IMPROVED ACCESS CONTROL SYSTEM AND A METHOD THEREOF CONTROLLING ACCESS OF PERSONS INTO RESTRICTED AREAS**

(71) Applicant: Detec AS, 1360 Fornebu (NO)
(72) Inventor: Helgesen, Knut Harald, 1364 Fornebu (NO)
(74) Representative: Midttun, Gisle Johan

(57) **Abstract**

An access control system controlling access to a restricted area of people is disclosed. An access server system is in communication with door systems configures to open or close doors associated with respective door systems. An access application is downloaded to respective smart phones of people seeking access to the restricted area. The access application transform the smart phone into an active dynamic type of access card.

## Description

### FIELD OF THE INVENTION

The present invention is related to an access control system and a method thereof, and especially to an access control system and method thereof comprising an access application program enabling a smart phone to function as an access card of the access control system.

### BACKGROUND OF THE INVENTION

Access control of employees and visitors entering residential areas and/or buildings is common. Dependent on a security level of for example a company inside a building, the access policy can be only to count the number of people moving in and out of the building, for example if the "company" is an open and free museum. If entrance to for example the museum requires payment of tickets, the access control is just a check of valid tickets.

If the building houses an advanced research facility, access control may require a security level identifying people that are authorized and authenticated to be allowed to enter the research facility, for example to prevent theft of sensitive research data, and also restricting access only to people that are qualified to handle for example dangerous materials (radioactive material, microorganisms etc.).

It is also common to have areas inside buildings with different security levels. If a specific visitor, entering a high security facility is there to present some new products, access to a special low-level security room designed for ordinary visitors can be used. Therefore, allocating physical electronical access control systems at doors inside buildings enables the possibility of differentiating access control levels of different areas inside buildings.

It is also possible to restrict movement inside buildings to be in one direction. If a person turns around and tries to pass a door the person just walked through, an electronic access control system at the door can prevent the person to go back through the door.

A common access control method is to issue access cards for example comprising information identifying the carrier of the card as an employee having a certain access level to the building. The card is used at access card terminals located besides doors, and when a valid access card is read at the door terminal (via for example NFC communication) the door is opened.

Visitors usually makes an approach to a reception area, wherein a receptionist makes a call to a contact person the visitor is informed to contact when arriving. The contact person can then come to the reception area and guide the person inside the building to for example a meeting room, or the contact person authorize the receptionist to print out an access card to the visitor. Such visitor cards are usually valid only for a limited time (i.e. the duration of the visit).

Loss of an access card can be a problem. Therefore, further methods of enhancing the protection against misuse of lost access cards is common. For example, access cards used at door terminals can be qualified with a secret PIN code entered into the door terminal via a keypad.

Terminals may be configured to read out the identification information stored on an access card, which can be verified in an access control system connected to the door terminal.

Biometric data like fingerprint readers, retina scanners, three dimensional face recognition via video cameras etc. can also be used to qualify the identification information stored on the card. In some instances, a card is omitted and access is controlled only by retina scanning and/or finger print readings for example.

Traditional Access control systems may track a person at the access points, but normally not in between access points.

Traditional access control systems may not identify wherein a person is located inside the building before arriving at an access point using a specific access card issued to the person.

Traditional access control systems may not be able to verify the true identity of a person before being verified via for example a video camera or by security personnel looking at passports etc.

Traditional access control systems are usually expensive when a high level of access security is required.

Patent application US 20130017812 A1 disclose a computer-implemented method and system providing remote access control of residential or office buildings. The disclosed method allow employing virtual doorman functions in non-doorman buildings. An example of a method may comprise steps of receiving a call signal from an intercom station;
the call signal comprising a resident identifier which indicates a resident with whom a visitor is trying to communicate;
receiving a video stream generated by at least one camera;
the video stream comprising one or more images of the visitor;
retrieving visitor data associated with the resident identifier;
the visitor data comprising one or more visitor profiles; and
providing access to the building for the visitor based upon one or more predetermined criteria.

This system may also require extensive administration to maintain associations between visitor data and resident identifiers. If the security of the access control needs to be improved, this system may rely on the more traditional access controls discussed above.

Therefore, there is a need of an improved method and system thereof providing secure access to restricted areas without undue administration.

### OBJECT OF THE INVENTION

It is a further object of the present invention to provide an alternative to the prior art.

In particular, it may be seen as an object of the present invention to provide an access control system comprising an access server system in communication with a smart phone configured with an access application program configuring the smart phone to function as an access card.

### SUMMARY OF THE INVENTION

Thus, the above described object and several other objects are intended to be obtained in a first aspect of the invention by providing an access control system controlling access of persons entering restricted areas comprising:
a door system configured to open or close an associated door or gate leading into the restricted area on command from an access server system,
wherein the door system comprises at least a door display located on a side of the door,
wherein the access server system displays a specific QR code on the door display, wherein the displayed QR code is changing whenever the door system is closing the door and is signalling the access server of the event of closing the door.

The invention is further providing a method of accessing a restricted area in an access control system comprising steps of:
- downloading an access application program to a smart phone,
- sending an authorization code from an access server system to the smart phone,
- configuring the access application program using the received authorization code,
- scan a QR code displayed on a door display with the smart phone,
- send the scanned QR code back to the access server system,
- receiving a confirmation code from the access server system confirming grant of access,
- the smart phone is configured to send the confirmation code to the door system over an established Bluetooth channel between the door system and the smart phone,
- the door system opens the door or gate associated with the door system.

Respective aspects of the present invention may each be combined with any of the other aspects. These and other aspects of the invention will be apparent from and elucidated with reference to the embodiments described hereinafter.

### DESCRIPTION OF THE FIGURES

Figure 1 illustrate an example of embodiment of the present invention.
Figure 2 illustrate further details of the example of embodiment illustrated in Figure 1.
Figure 3 illustrate further details of the example of embodiment illustrated in Figure 1.
Figure 4 illustrates further detail of the example of embodiment illustrated in Figure 1.

The access control system and method thereof according to the present invention will now be described in more detail with reference to the accompanying figures. The accompanying figures illustrates an example of embodiment of the present invention and is not to be construed as being limiting to other possible embodiments falling within the scope of the attached claim set.

### DETAILED DESCRIPTION OF AN EMBODIMENT

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. The mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous. An aspect of the present invention is to allow respective persons (visitor and/or employees) to create their own verified access identity by using their own mobile smart phone.

The system is based on a server/client model wherein the client is a smart phone installed with an access control application according to the present invention.
The access server (computer system) according to the present invention is controlled by a person or persons authorized to handle the access server system configured to control access of a specific geographical area, and/or a residential area and/or a building.

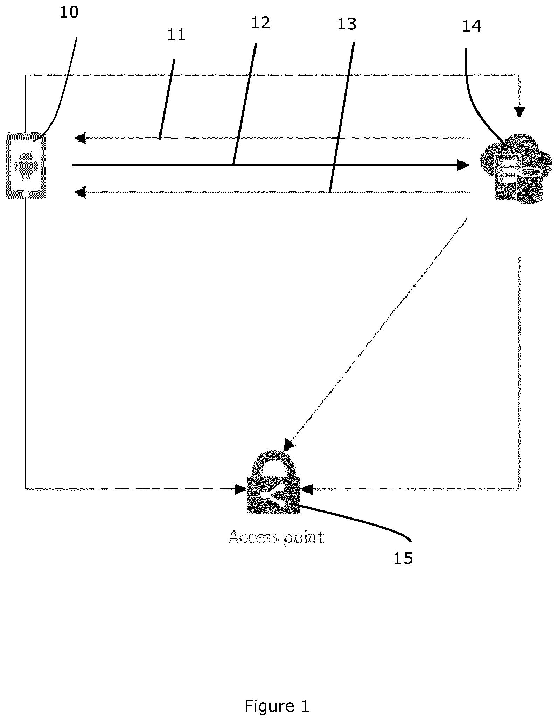

Figure 1 illustrate some respective system components and main communication flow between system components according to an example of embodiment of the present invention.

The first time an employee or a visitor is authorized (collectively referred to as a person below) to enter a building, an aspect of the present invention is to use a smart phone as the access control "card" of the access control system of the present invention. This is implemented as an application program in the smart phone denoted access app.

The process of acquiring a smart phone based access app is disclosed further below.

In Figure 1, the access point 15 refer to the door locking/door opening mechanism or door system located at the door entrance. In such systems the door lock is operated electronically as known in prior art. In some instances, the door system is located on both sides of the door.

A first step of controlling access through a door (or gate) is to make sure the physical presence of the person trying to pass the door system, i.e. opening the door. A door system according to the present invention comprises at least a small display (not illustrated) beside the door. The door display is in communication with an access server system 15, and the access server system 15 is displaying 17 a QR code on the door display. The person seeking authorization to pass the door is then using the camera of his smart phone 10 to read the QR code. The access app in his smart phone 10 is configured to send 14 the QR code back to the server system 15.

The access server system 15 is changing the QR code whenever the door is opened. Therefore, the feedback of the QR code is a strong indication of physical presence of the person. The QR code can include for example a one-time code and instructions for a Bluetooth connection between the smart phone 10 and the door system of the access point 15, and the mobile phone 10 and the door system can communicate via Bluetooth for example.

At a low security level, the recognition of the QR code can be sufficient to grant access for the person. At a higher security level, three dimensional face recognition can be used. For example, the access app instructs the person to start the video camera and make a video of the persons face seen from different angles (3D recognition). The live video stream is sent 12 to the access server system 15 that returns an accept signal 13 to the smart phone 10. The smart phone 10 issues an open door command via fort example the Bluetooth communication channel 18. The door is opened, the person passes the door, and the door closes and the access server system 15 submits 17 a next QR code to the display.

It is also within the scope of the present invention to apply for example a fingerprint reader in an example of embodiment of a door system.

Whenever a person needs access, the person issues a request to the responsible department, i.e. the person or persons authorized to authenticate access to the requested object (building, residential area etc.), or directly by sending a message to the access server system 15 that can be configured to interpret requests for access. The request is temporarily approved by transferring a link to the requesting person's smart phone comprising a link to an access server system 15 from which the requesting person can download the access control application, the access app, to his own smart phone.

If the requesting person is an employee, identification details like phone number, photo of the persons face, date of birth, social security number etc. is available to the access server system, for example via Internet, from a database of the company comprising data about employees.

Even if the person is an employee of an institution having an extremely high security level, some caution of approving access for any person is necessary since for example a phone belonging to an employee may have been stolen. Therefore, performing some steps confirming the identity of the requesting person can be necessary. For example, a door system according to the present invention may comprise a passport reader as found at airports.

When a person is receiving the link to the access app, the requesting person may receive a PIN code to his smart phone via e-mail or SMS for example, which is necessary to enter when starting configuring the access control application. The access control application can automatically start a front side video camera on the phone instructing the requesting person to film himself by moving the camera around his face. Thereby, a three dimensional image of the requesting person's face is created. This image can then be stored in the access server system 15.

The level of scrutiny of the requesting person depends on the security level required at the premises protected by the access system.

Therefore, in lower security level cases the temporal approval can happen automatically without interference from any authorized persons controlling the access to the protected building or area. Basis for the temporal approval can be provided for by a PIN code sent the requesting person as discussed above.

If the requester is a visitor, any personal data is seldom stored at the premises the visitor plans to visit.

According to an aspect of the present invention, a visitor can receive a link to the access control application by an employee or any other trusted person in an organization comprising a link to a server system, for example the access server system 15, from where the visitor can download the access app according to the present invention.

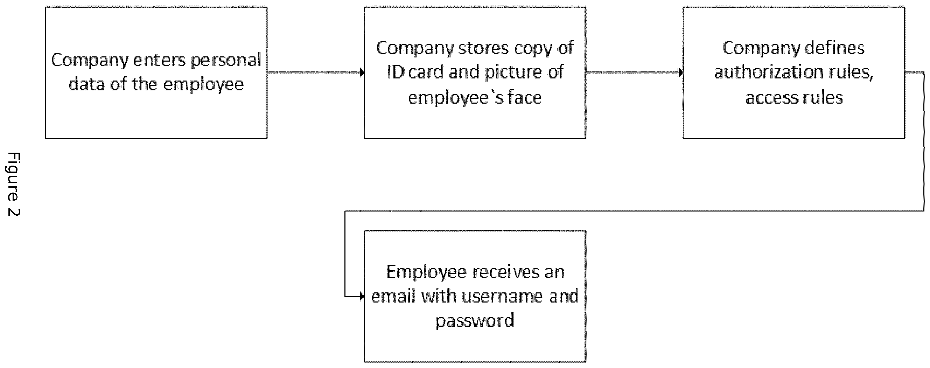

Figure 2 illustrate a flow of steps when registering an employee provided with the access app according to the present invention.

A human resource department will enter personal data related to the employee in an employee database. Copies of identification papers like drivers licence, passports etc. may also be added. Then the company assign and define authorization rules and access rules for the specific employee, i.e. at which security level the employee will function. The first time the employee is registered, an e-mail with username and encrypted password will be sent to the employee enabling the employee to download the access app and start configuring the access app. Respective authorization rules and access rules will be downloaded to respective door system thereby being configured to allow passage of the employee through respective doors according to the defined access rules of the employee. For example, which area of a building the employee has access, or which areas of the building the employee is denied access.

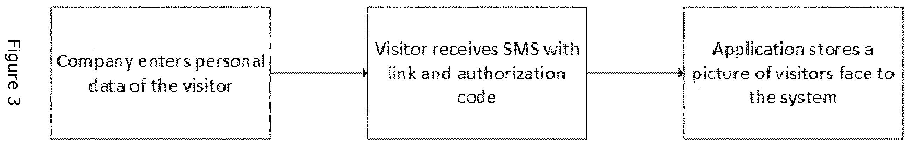

Figure 3 disclose flow of steps for a visitor. As discussed above, a visitor is usually in contact with an employee that will accept a visit from the visitor. As illustrated in Figure 3, the flow represent a simple process of gaining access to the company or organization the visitor plans to visit. The reason behind this is the ability of the combined functionality of the access app and the access server according to the present invention to install access rules residing in door systems. Some personal data of the visitor is necessary to enter together with for example date of the visit and the hours of the day the planned visit will occur. Thereby, the access app of the visitor is valid only during a narrow time window on a specific day.

A picture of the visitor (taken by the visitor himself) can be stored in the access server 15 and be used in a three dimensional face recognition process as discussed above when the visitor enters a door.

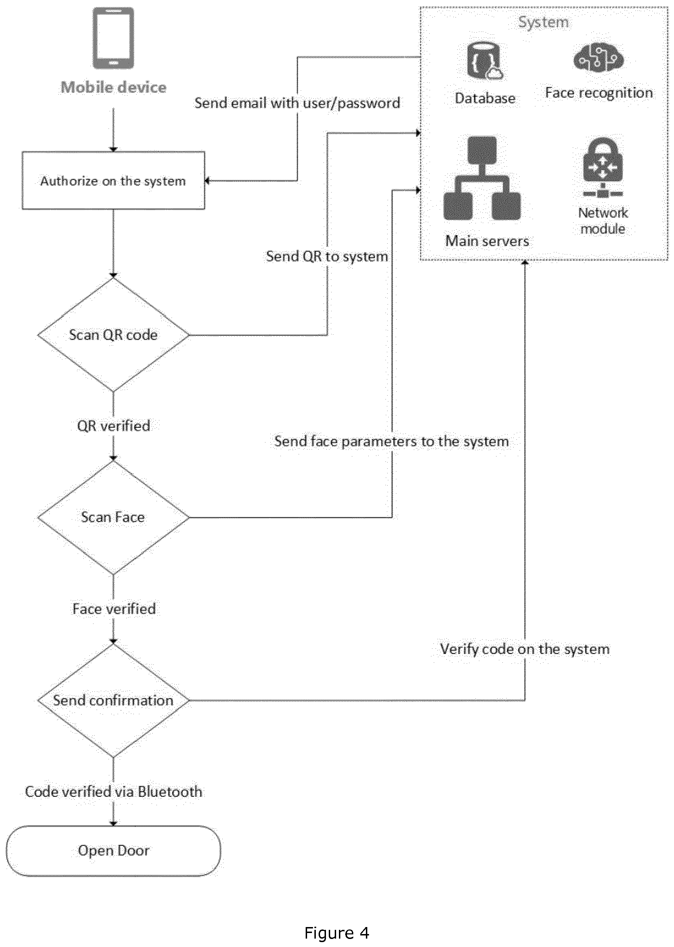

Figure 4 illustrate a flow diagram representing process steps implemented in the access app, and how the access app communicate with an access server according to the present invention thereby providing functionality as discussed above of the door system and respective access rules.

When the access "card" is a smart phone, tracking of movement of the smart phone inside buildings is possible, for example monitoring GPS positions sent form the smart phone, or by using Internet access points of local area network to identify positions. The access server 15 may be configured to plot movements on a map depicting the interior of the building.

It is also possible to use an accelerometer of a smart phone to track movement patterns of a person. Such movements are individual, and can be detected in a movement pattern recognition process, wherein a measured movement pattern identified by accelerometer values is compared with previously recorded movement patterns. This can be part of a further step of verifying the identity of a person.

It is also within the scope of the present invention to use voice recognition processes when authenticating a person.

Sometimes power is lost in a building, or there is an emergency incident, for example fire in the building. The door system according to the present invention is equipped with a battery backup providing emergency power. In addition, a copy of the access data, i.e. access rules etc. is stored locally in a computer system located at the door system. Thereby a person can use the access app and be allowed to pass a door.

When there is a fire, the access server system 15 may be configured to open up all doors and gates in the building. It is also possible to have a smoke and fire detector system nearby respective doors. When a fire, or a possible fire is detected nearby the door, the door system opens up the doors.

Some of the tools used in respective examples of embodiments of the present invention are commercial available. For example, face recognition programs that may be used is for example Google MLKIT and Azure Face API.

According to an example of embodiment an access control system controlling access of persons entering restricted areas comprising a door system configured to open or close an associated door or gate leading into the restricted area on command from an access server system (15) when the access server system grant access to a person,
wherein the door system comprises at least a door display located on a side of the door,
wherein the access server system (15) displays a specific QR code on the door display, wherein the displayed QR code is changing whenever the door system is closing the door and is signalling the access server (15) of the event of closing the door.

Further, the system may comprise an access application program downloaded to smart phones of respective persons seeking access to the restricted area,
wherein the access application program serves as an electronic access card of the access control system,
wherein the access application program is configured to enable a camera on the smart phone to scan the displayed QR code on the door display and transmitting the displayed QR code back to the access server system (15),
wherein access of a person is based on an identity of the smart phone and the content of the QR code received back from the smart phone.

Further, the system may display QR codes comprising a verification code of the door or gate locations inside the restricted area.

Further, the system may display QR codes comprising a one-time code and instructions of setting up a Bluetooth communication channel between a smart-phone downloaded with the application program and the door system associated with the door display.

Further, the system may configure the access application program to instruct a person associated with a specific smart phone in communication with the door system to record a video stream of the persons face, and to transmit the video stream to the access server system(15) for a three dimensional face recognition process.

Further, the system may comprise a fingerprint reader.

Further, the system may configure the access application program to instruct a person associated with a specific smart phone in communication with the door system to record the voice of the person, and to transmit the voice stream to the access server system(15) for a voice recognition process.
the access application program is configured to send accelerometer values to the access server system, thereby enabling recognition of specific movement patterns of a person carrying a smart phone.

According to an example of embodiment of the present invention a method of accessing a restricted area comprising an access control system of claim according to the present invention, may comprise steps of:
- downloading an access application program to a smart phone,
- sending an authorization code from an access server system to the smart phone,
- configuring the access application program using the received authorization code,
- scan a QR code displayed on a door display with the smart phone,
- send the scanned QR code back to the access server system,
- receiving a confirmation code from the access server system confirming grant of access,
- the smart phone is configured to send the confirmation code to the door system over an established Bluetooth channel between the door system and the smart phone,
- the door system opens the door or gate associated with the door system.

The method may further comprise adding a step of providing a three dimensional face recognition.

The method may further comprise adding a step of providing voice recognition.

The method may further comprise adding a step of movement pattern recognition.

The method may further comprise the step of granting an employee access to a restricted area according to a security level associated with the employee, wherein access is controlled by enabling respective door system to let the employee pass the associated door or gate if the door or gate is leading the employee into allowed areas.

The method may further comprise steps of granting a visitor access to a restricted area by instructing the visitor to download the access application program to the visitors smart phone,
- the access application program is further configured to grant access to a limited restricted area on a specific date and in between a limited time span on that day.

The method may comprise grant of access of persons to sub areas of the restricted area is granted which hour, day, date, month or week grant of access is provided.

## Claims

1. An access control system controlling access of persons entering restricted areas comprising a door system configured to open or close an associated door or gate leading into the restricted area on command from an access server system (15) when the access server system grant access to a person,
wherein the door system comprises at least a door display located on a side of the door,
wherein the access server system (15) displays a specific QR code on the door display, wherein the displayed QR code is changing whenever the door system is closing the door and is signalling the access server (15) of the event of closing the door.

2. The access control system of claim 1, comprising an access application program downloaded to smart phones of respective persons seeking access to the restricted area,
wherein the access application program serves as an electronic access card of the access control system,
wherein the access application program is configured to enable a camera on the smart phone to scan the displayed QR code on the door display and transmitting the displayed QR code back to the access server system (15),
wherein access of a person is based on an identity of the smart phone and the content of the QR code received back from the smart phone.

3. The access control system of claim 1, wherein the displayed QR code comprises a verification code of the door or gate location inside the restricted area.

4. The access control system of claim 2, wherein the displayed QR code comprises further a one-time code and instructions of setting up a Bluetooth communication channel between a smart-phone downloaded with the application program and the door system associated with the door display.

5. The access control system of claim 2, wherein the access application program is configured to instruct a person associated with a specific smart phone in communication with the door system to record a video stream of the persons face, and to transmit the video stream to the access server system(15) for a three dimensional face recognition process.

6. The access control system of claim 1, wherein the door system comprises a finger print reader.

7. The access control system of claim 2, wherein the access application program is configured to instruct a person associated with a specific smart phone in communication with the door system to record the voice of the person, and to transmit the voice stream to the access server system(15) for a voice recognition process.

8. The access control system of claim 1, wherein the access application program is configured to send accelerometer values to the access server system, thereby enabling recognition of specific movement patterns of a person carrying a smart phone.

9. A method of accessing a restricted area in an access control system of claim 1-8, comprising steps of:
- downloading an access application program to a smart phone,
- sending an authorization code from an access server system to the smart phone,
- configuring the access application program using the received authorization code,
- scan a QR code displayed on a door display with the smart phone,
- send the scanned QR code back to the access server system,
- receiving a confirmation code from the access server system confirming grant of access,
- the smart phone is configured to send the confirmation code to the door system over an established Bluetooth channel between the door system and the smart phone,
- the door system opens the door or gate associated with the door system.

10. The method of claim 9, further comprising adding a step of providing a three dimensional face recognition.

11. The method of claim 9, further comprising adding a step of providing voice recognition.

12. The method of claim 9, further comprising adding a step of movement pattern recognition.

13. The method of claim 9, further comprising the step of granting an employee access to a restricted area according to a security level associated with the employee, wherein access is controlled by enabling respective door system to let the employee pass the associated door or gate if the door or gate is leading the employee into allowed areas.

14. The method of claim 9, further comprising steps of granting a visitor access to a restricted area by instructing the visitor to download the access application program to the visitors smart phone,
- the access application program is further configured to grant access to a limited restricted area on a specific date and in between a limited time span on that day.

15. The method of claim 9, wherein access of persons to sub areas of the restricted area is granted based on which hour, day, date, month or week grant of access is provided.
